# DEMANDE DE BREVET EUROPEEN

(11) **EP 1 741 927 A1**
(43) Date de publication de la demande: **10.01.2007**
(21) Numéro de dépôt: 05076526.2
(22) Date de dépôt: 04.07.2005
(51) Int. Cl.: F03D 9/00, F03D 1/04, F03D 9/02

(54) **Générateur d'énergie à cheminée solaire**

(71) Demandeur: Azar, John, Bujumbura (BI)
(72) Inventeur: Azar, John, Bujumbura (BI)
(74) Mandataire: Colens, Alain M.G.M.

(57) **Abrégé**

L'invention concerne un dispositif pour la production d'énergie électrique par vent artificiel comportant une cheminée (1) et une turbine (7) à axe vertical alimentée en air chaud. L'air chaud est obtenu par incorporation de radiateurs alimentés (2) par un fluide caloporteur parcourant un circuit fermé. Le fluide est chauffé à l'extérieur de la cheminée par example dans des tuyaux exposés au rayonnement solaire. Les radiateurs peuvent être prévus en dehors de la cheminée dans des conduits (20), l'air chauffé étant amené à la base de la cheminée par ces conduits. Les radiateurs (22) sont inclinés par rapport au flux d'air. Selon une variante de l'invention, les radiateurs (2) sont prévus à l'interieur de la cheminée et disposés sous la forme de cônes (4) concentriques.

## Description

La présente invention concerne une installation pour récupérer l'énergie d'un fluide caloporteur par l'intermédiaire d'au moins une turbine alimentée par un vent artificiel créé dans un arrangement en forme de cheminée.

On connait déjà pareils dispositifs par exemple sous l'appellation de "wind chimney" ou "tour solaire". Le vent est créé par un effet de convection. Il s'agit de l'équivalent aérien d'une turbine hydraulique. Une réalisation a fonctionné à Manzanares en Espagne avec une cheminée de 200m de hauteur et une turbine à axe vertical qui a produit pendant sept années 50 MW.
Très schématiquement, la cheminée est entourée d'une "serre" périphérique produisant l'air chaud qui est amené dans la cheminée.

L'invention propose un nouveau système plus simple et plus efficace, permettant une production d'électricité constante et réglable aussi bien en mode diurne que nocturne.

Plus particulièrement, l'invention concerne un dispositif pour la production d'énergie électrique par vent artificiel comportant une cheminée et une turbine à axe vertical alimentée en air chaud dans lequel l'air chaud est chauffé par incorporation dans le dispositif de radiateurs alimentés par un fluide caloporteur parcourant un circuit fermé, ledit fluide étant chauffé à l'extérieur de la cheminée.

Selon un mode de réalisation de l'invention, l'air est chauffé à l'intérieur et non plus à la périphérie de l'installation. On prévoit dans ce but l'incorporation de radiateurs à l'intérieur et à la base d'une cheminée de forme approximativement conique qui peut être de forme semblable à celle d'un échangeur humide de chaleur de type hyperboloide (bien connu dans les centrales nucléaires)..

Lesdits radiateurs sont alimentés par un fluide caloporteur parcourant un circuit fermé de conception classique, avec circulation naturelle et/ou assistée.

Le circuit du dispositif comprend de préférence un réservoir, pouvant alimenter les radiateurs en fluide chaud la nuit. Le réservoir peut éventuellement faire office de vase d'expansion. Un vase d'expansion est en effet prévu de préférence dans l'axe de la cheminée et juste au dessus du sommet desdits radiateurs. Cette dernière configuration favorise une circulation naturelle du fluide calorifique.

Le circuit comprend une partie sous forme de conduits ou tuyaux, p.e en forme de batteries, s'étendant sur une grande surface aux alentours de la tour afin d'y capter, en mode diurne, l'énergie solaire. Le fluide chauffé revient vers le réservoir qui à son tour alimente les radiateurs. Le fluide est refroidit en descendant dans les radiateurs et est récupéré puis amené dans des conduits pour y être à nouveau réchauffé.

Les radiateurs sont prévus en forme de troncs de cône. De préférence on fait appel à plusieurs troncs de cône coaxiaux, de diamètres diminuant de la périphérie vers le centre.

Du centre vers la périphérie, la base ces radiateurs en troncs de cône est plus élevée, les cônes intérieurs se superposant l'un l'autre. La base circulaire ou quasi-circulaire de chaque radiateur est supportée par une construction annulaire constituée de colonnes de support, assurant sa stabilité et permettant le passage de l'air ambiant à la base de la cheminée puis entre chaque radiateur. Ces ensemble de colonne de supports sont similaires au colonnes de support des cheminées des tours de refrigération susmentionnées (échangeurs humides).

Les radiateurs sont de préférence disposés autour de l'axe de la cheminée. La cheminée peut être droite, conique ou peut présenter une surface hyperboloide bien connue pour les cheminées de refroidissement des réacteurs nucléaires. Les radiateurs peuvent être conçus sous la forme d'ensembles d' envelopges longitudinales minces de forme trapézoidales. Selon un mode de réalisation, ces radiateurs, éventuellement munis d'aillettes pour favoriser l'échange thermique, sont disposés en cercle inclinés l'un vers l'autre pour former un jeu de pseudo troncs de cône coaxiaux à la cheminée.

Chaque élément de cône est supportée par une couronne métallique par exemple en poutrelles et le sommet de chaque radiateur repose sur un cerceau auquel il peut être solidarisé. De préférence les radiateurs sont surmontés en alignement par une surface de même pente afin de guider le flux annulaire d'air chauffé vers le centre. La tour ou la cheminée peut comporter un noyau central de sorte que le flux final dans la cheminée est annulaire et de section telle que la vitesse de l'air peut entraîner non pas une éolienne mais une véritable turbine.

Le fluide caloporteur peut être de l'eau, mais peut aussi être de l'huile ou tout autre fluide approprié.

Le captage et le stockage de l'énergie solaire sous forme calorifique se fait durant la journée par deux systèmes éventuellement indépendants :
- un système pour usage immédiat et production d'électricité diurne
- un système pour la production d'électricité nocturne, le fluide qui véhiculera les calories étant stocké jusqu'à la tombée de la nuit dans des réservoirs calorifugés.

Le captage est obtenu par chauffage solaire d'un fluide qui se trouve de préférence dans des tuyaux placés horizontalement en batterie et reliés à un réservoir de stockage d'une part et à un vase d'expansion situé à l'intérieur du noyau central de la tour à un niveau légèrement supérieur au point le plus haut des échangeurs de chaleur.

Dès que le fluide a atteint une température voulue, il est envoyé dans le réservoir par une pompe de circulation. La circulation du liquide chaud à l'intérieur de la tour, en particulier dans les radiateurs, sera assisté ou se fera également, de préférence, par pompe de circulation.

Selon un autre mode de réalisation, l'invention propose un dispositif dans lequel l'air est chauffé à l'extérieur de la cheminée mais toujours par action de radiateurs et d'un fluide caloporteur. Les radiateurs sont situés dans des grands conduits ouverts vers le bas et qui rayonnent "en épis" à partir de la base de la cheminée. L'air est aspiré et chauffé dans ces conduits et guidé vers la cheminée. De préférence ces conduits sont inclinés. Selon un aspect de l'invention, de préférence la base de la cheminée est dès lors située sur le sommet d'une large butte dont les côtés supportent lesdits conduits chauffants.

Ce mode de réalisation est avantageux car il plus adapté à l'utilisation d'un fluide caloporteur beaucoup plus efficace que l'eau, par exemple une huile. Les radiateurs sont en effet aisément accessibles et une fuite ou panne éventuelle sera beaucoup plus facilement réparée par le personnel de la maintenance.

A titre préliminaire, l'invention a été facilement validée par un modèle simplifié fabriqué avec des batteries de tuyaux de plomberie de 1 et 3/4 pouce de diamètre et d'environ 1 mètre de longueur soudés en série, soumis à un rayonnement solaire. Les sections totales internes vont en s'amenuisant par diminution du nombre des tuyaux et/ou du diamètre. Malgré les pertes de charge des vitesses de 3,7 m/s ont été relevées. La surface extérieure des tuyaux métalliques peints en noir mat peut atteindre facilement 60°C, et dépasser les 100°C lorsque l'on fait usage de plaque d'acier inox cintrées utilisées comme déflecteurs de la lumière solaire.

De même, on a vérifié la validité du système proposé en assemblant des éléments métalliques chauffés par circulation d'eau chaude, placés parallèlement l'un à l'autre, inclinés de 60° sur l'horizontale et confinés dans un espace d'accélération (conduit) muni d'une sortie sous forme de "cheminée de tirage"

L'invention sera mieux comprise à l'examen des autres dessins en annexe fournis à titre d'exemple uniquement.

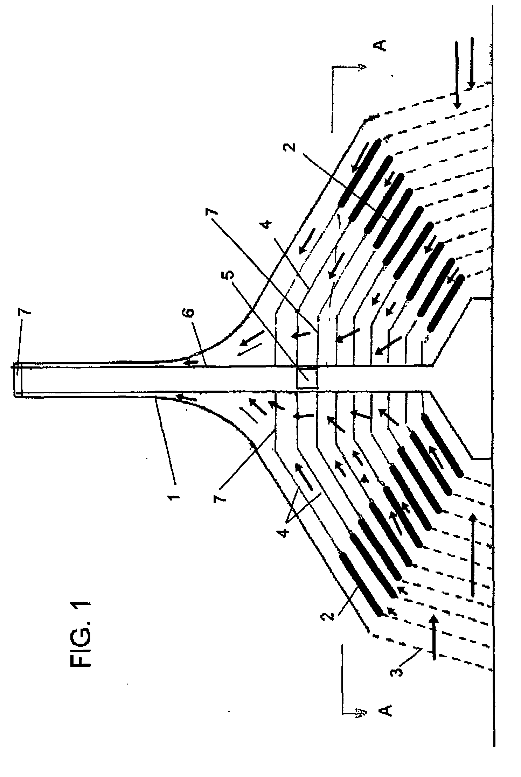

La fig. 1 représente schématiquement une section en élévation d'un exemple de réalisation d'une cheminée dont la base serait de 300 m et la hauteur totale d'environ 200 mètres.

Le système est donc basé sur la création d'un courant d'air artificiel qui est un courant ascendant d'air chaud obtenu à partir du contact de l'air environnant avec les parois métalliques inclinées d'une série de troncs de cônes, parois inclinées à environ 60° sur la verticale et formées de plaques d'acier, éventuellement avec ailettes (non illustrées), pour former des échangeurs de chaleur. Ces échangeurs de chaleur sont chauffés par circulation interne de liquide (eau ou huile) préalablement chauffé au soleil, la circulation pouvant être assurée naturellement comme un système de chauffage central ordinaire muni d'une chambre d'expansion 5 en partie haute. Cette circulation est améliorée et régulée par adjonction de pompes de circulation qui de plus, en combinaison avec des robinets ou vannes permette de régler la quantité d'énergie électrique produite en envoyant plus ou moins de liquide chauffé dans les radiateurs 2. Ce système permet de contrôler les deux modes extrêmes de fonctionnement : mode diurne et mode nocturne.

Les parties supérieures 4 surmontant les radiateurs 2 sont des continuations de ces éléments, mais simplifiés car ils ne sont pas chauffés par du liquide et donc ne comportent pas nécessairement de chambre de circulation de fluide. Ils ne servent que comme élément de guidage avec accélération de l'air vers la cheminée centrale.

Afin de permettre l'entrée de l'air de façon aisée dans les parties inférieures de tous les troncs de cône, ceux-ci seront placés à des niveaux différents. Le tronc de cône le plus proche du centre sera au niveau la plus bas et le tronc de cône le plus éloigné sera situé au niveau le plus haut. Les niveaux de base des autres troncs seront échelonnés linéairement entre ces deux extrêmes.

La longueur de la surface de chauffe devra être limitée à des valeurs rentables. Selon un mode de réalisation, de préférence, la section de passage de l'air chaud aura diminué environ de moitié entre le premier et dernier contact avec la surface de chauffe. Dans le cas illustré, la section extérieure diminue de 50% après une distance (mesurée sur la trajectoire de l'air chaud) au point où la distance entre ce point et l'axe central est de 150 m. En limitant cette réduction encore de 50% pour tenir compte de l'effet de l'augmentation de la température, nous constatons que ceci arrive lorsque le diamètre atteint 225 m. Les radiateurs ont donc une hauteur calculée obliquement d'environ 52 m.

Le reste de la partie supérieure du tronc de cône restera en place sur une longueur variable de 70 m sans chauffage.

On notera que le système permet de diriger le courant d'air vers la périphérie de la section de sortie ce qui fait que l'ont obtient un flux annulaire d'air et non pas cylindrique, ce qui pour un même volume d'air, améliore très sensiblement le rendement au niveau de la turbine.

Enfin étant donné que seul l'air en contact avec la paroi est chauffé, on isolera de préférence la partie extérieure de la tour afin de limiter les pertes de chaleur surtout la nuit. On distingue également la turbine 8 adaptée à un flux d'air chaud de grande vitesse, régulier et annulaire. On peut ainsi produire directement un courant alternatif synchrone (contrairement à la plupart des éoliennes).

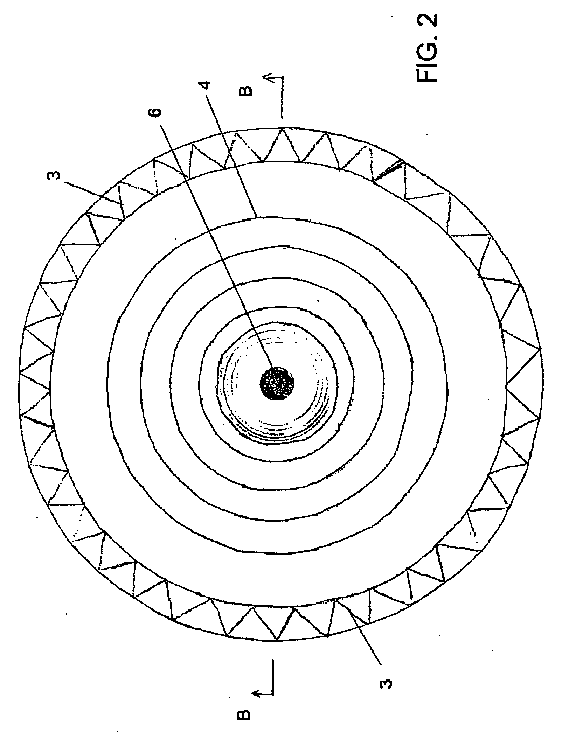

La fig. 2 représente une coupe en A-A horizontale de la fig. 1 montrant les cônes concentriques 4, la structure ajourée de soutien 3 et le pilier central 6.

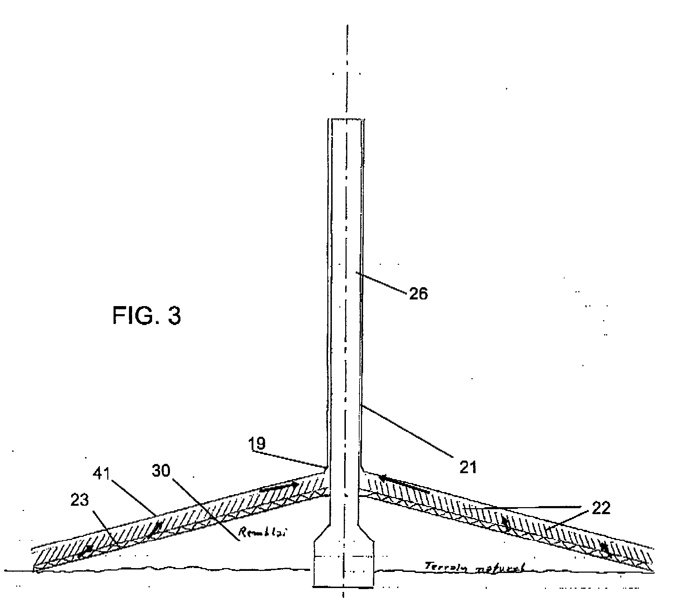

La fig. 3 illustre l'autre mode de réalisation dans lequel le vent artificiel est formé dans des conduits 20 s'élevant vers la base d'une cheminée droite, chaque conduit comportant un certain nombre de plaques chauffantes 22 (radiateurs) obliques espacés, et étant ouverts à la base de façon à y admettre l'air. Un passage 35 en partie haute de ces conduits 20 est également prévu pour permettre à l'air chauffé d'évoluer à vitesse accélérée et rectiligne vers la base 19 de la cheminée comprenant un noyau central 26 et une zone de sortie d'air 21.

Ces conduits 20 rayonnent "en épis" à partir de la base 19 de la cheminée. L'air est aspiré et chauffé dans ces conduits et guidé vers la cheminée. La base de la cheminée peut être située sur le sommet d'un remblai 30 dont la surface latérales supportent lesdits conduits chauffants. On distingue en 23 les structures supportant les radiateurs 22.

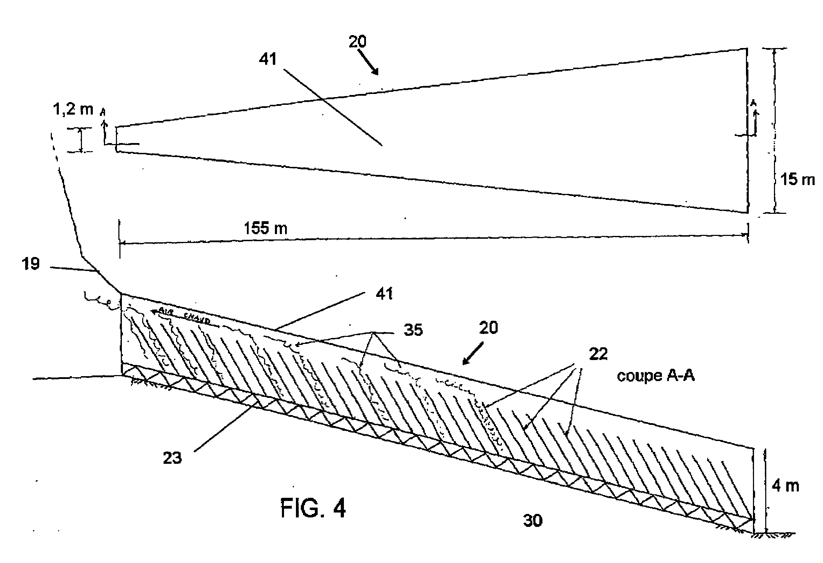

la fig. 4 illustre plus en détail un des conduits vu en section en plan et de côté. Le schéma n'est pas à l'échelle. La face supérieure 41 d'un conduit 20 est trapézoidale

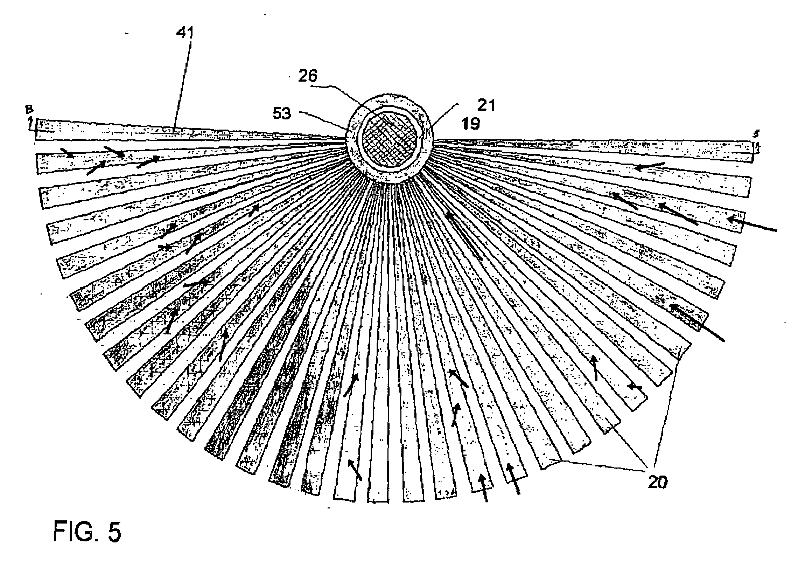

la fig. 5 illustre une demi-installation en épi. Il y a 64 conduits qui sont prévus de forme trapézoidale, ce qui permet par ailleurs d'en augmenter le nombre juxtaposant la base de la tour.
Les flèches illustrent les voies d'entrée de l'air ambiant.

Sur la base de cet exemple en supposant un diamètre extérieur de l'arrangement des conduits de l'ordre de 350 m, et un diamètre de 40 m pour la base de la cheminée, les conduits ayant une entrée de 15 m x 4m et une sortie de 1,2 m x 4m on peut calculer une vitesse de vent de l'ordre de 300 km/h en tenant compte d'une perte de charge de 50%. La puissance théorique disponible serait dès lors d'environ 33 Mw.

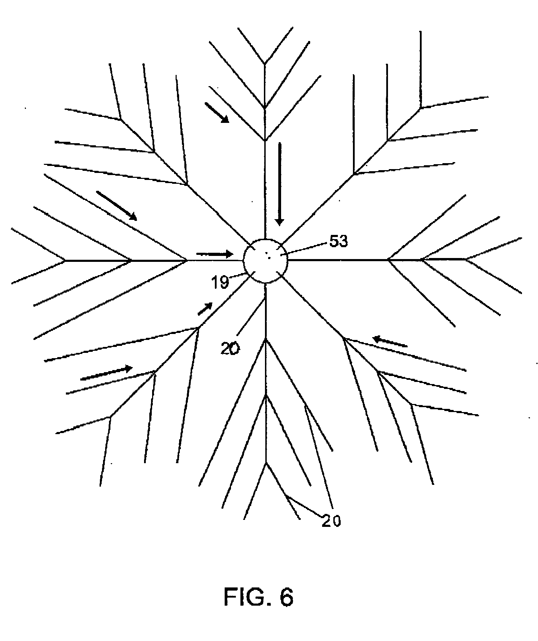

La fig. 7 illustre un arrangement particulier d'épis ou conduits en arborescence.

## Revendications

1. Dispositif pour la production d'énergie électrique par vent artificiel comportant une cheminée et une turbine à axe vertical alimentée en air chaud **caractérisé en ce que** l'air chaud est chauffé par incorporation de radiateurs alimentés par un fluide caloporteur parcourant un circuit fermé, ledit fluide étant chauffé à l'extérieur de la cheminée.

2. Dispositif selon la revendication 1 dans lequel les radiateurs sont prévus en dehors de la cheminée dans des conduits et l'air chauffé est amené à la base de la cheminée par ces conduits.

3. Dispositif selon la revendication 2 dans lequel les conduits comprennent des radiateurs plats transversaux dont les parties supérieures sont inclinées vers la base de la cheminée.

4. Dispositif selon n'importe laquelle des revendications 2 ou 3 dans lequel les conduits sont de sections transversale approximativement rectangulaire et dont la base est susceptible de laisser entrer l'air extérieur, la partie supérieure présentant un chemin libre rectiligne permettant à l'air chauffé et accéléré d'accéder à la base de la cheminée.

5. Dispositif selon n'importe laquelle des revendications 2 à 4 dans lequel les faces supérieures des conduits sont de forme trapézoidale, le côté le plus court juxtaposant la base de la cheminée.

6. Dispositif selon n'importe laquelle des revendications 2 à 5 dans lequel la base de la cheminée est surélevée sur un remblai, les conduits amenant l'air chauffé et accéléré étant inclinés.

7. Dispositif selon n'importe laquelle des revendications précédentes dans lequel le fluide caloporteur est une huile.

8. Dispositif selon n'importe laquelle des revendications 10 à 15 dans lequel le nombre de conduits est compris entre 5 et 100.

9. Dispositif selon la revendication 1 dans lequel les radiateurs sont disposés à l'intérieur de la cheminée.

10. Dispositif selon n'importe laquelle des revendications précédentes dans lequel le fluide calorifique est chauffé par rayonnement solaire sur une surface à la périphérie de la cheminée.

11. Dispositif selon n'importe laquelle des revendications précédentes dans lequel le fluide calorifique est chauffé par une source de chaleur perdue dans un processus industriel, p.e. dans une centrale nucléaire.

12. Dispositif selon n'importe laquelle des revendications précédentes dans lequel dans lequel le circuit fermé comprend au moins un réservoir de stockage constituant une réserve de fluide caloporteur.

13. Dispositif selon n'importe laquelle des revendications 1 et 9 à 12 lequel le circuit comprend un vase d'expansion localisé dans l'axe de la cheminée.

14. Dispositif selon la revendication 9 ou 12 dans lequel un réservoir de stockage ou une partie de celui-ci est localisé dans le noyau de la cheminée.

15. Dispositif selon n'importe laquelle des revendications 9 à 14 comportant des radiateurs intérieurs à la cheminée et dans lequel les radiateurs sont prévus en forme de tronc de cônes coaxiaux superposés de diamètres diminuant de la périphérie vers le centre.

16. Dispositif selon n'importe laquelle des revendications précédentes dans lequel du centre vers la périphérie, la base de ces radiateurs en troncs de cône est graduellement plus élevée.

17. Dispositif selon n'importe laquelle des revendications précédentes dans lequel les radiateurs sont inclinés par rapport au flux de l'air entrant ou s'élevant dans la cheminée.
